Europäisches Patentamt

European Patent Office

Office européen des brevets

(19)

(11) Veröffentlichungsnummer : **0 066 643**
**B1**

(12) EUROPÄISCHE PATENTSCHRIFT

(45) Veröffentlichungstag der Patentschrift :
20.02.85

(51) Int. Cl.⁴ : **H 02 K   7/08**, H 02 K 21/16

(21) Anmeldenummer : **81104419.7**

(22) Anmeldetag : **09.06.81**

(54) Synchronkleinmotor, insbesondere Klauenpolmotor.

(43) Veröffentlichungstag der Anmeldung :
15.12.82 Patentblatt 82/50

(45) Bekanntmachung des Hinweises auf die Patenterteilung : 20.02.85 Patentblatt 85/08

(84) Benannte Vertragsstaaten :
CH DE FR LI NL

(56) Entgegenhaltungen :
CH-A-   520 433
FR-A- 2 032 148

(73) Patentinhaber : Siemens Aktiengesellschaft
Berlin und München Wittelsbacherplatz 2
D-8000 München 2 (DE)

(72) Erfinder : Wechner, Siegfried
Bergstrasse 59
D-8700 Würzburg (DE)

**Beschreibung**

Die Erfindung bezieht sich auf einen Synchron-kleinmotor, insbesondere Klauenpolmotor, ge-mäß Oberbegriff des Anspruchs 1 ; ein derartiger Motor ist aus der DE-B-1 128 546, insbes. Fig. 3 bekannt.

Die Kurzschlußbrille besteht bei den bekannten Motoren normalerweise aus einer ausgestanzten Kupferplatte ; als Gleitlager werden üblicherweise Sinterbronzelager eingesetzt. Bei der Montage werden die Kurzschlußbrille einerseits und das Gleitlager andererseits als getrennte Bauteile montiert und direkt oder indirekt über andere Statorbauteile in feste Verbindung zueinander gebracht. Es ist dazu beispielsweise bekannt, die Kupfer-Kurzschlußbrille mit einem an das Sinterbronze-Gleitlager angeformten Zentrierbund zu verstemmen.

Aufgabe der vorliegenden Erfindung ist es, den Aufwand für die Fertigung und Montage von Synchronkleinmotoren, insbesondere Klauenpolmotoren, mit Sinter-Gleitlagern und Kurzschlußbrillen zu vermindern und damit die Massen-Serienfertigung solcher Motoren wesentlich zu verbilligen.

Diese Aufgabe wird bei einem Synchronkleinmotor der eingangs genannten Art durch die kennzeichnende Lehre des Anspruchs 1 gelöst. Vorteilhafte Ausgestaltungen der Erfindung werden durch die Gegenstände der Unteransprüche beschrieben.

Durch die erfindungsgemäße Integration von Kurzschlußbrille und Gleitlager zu einem einstückigen Sinter-Bauteil, insbesondere einem einstückigen Sinterbronze-Bauteil, wird für beide Teile nur noch ein einziger Fertigungs- und Montageschritt benötigt, wobei sich in überraschender Weise gezeigt hat, daß der wegen seiner Ölspeicherfähigkeit zu wählende Sinter-Werkstoff auch die Forderungen nach einer hinreichenden Phasenverschiebung des Flusses der durch die Kurzschlußbrille belasteten Hilfspole gegenüber dem Fluß der Hauptpole im Sinne eines nach Größe und Richtung bestimmten Anlaufmomentes voll erfüllen kann. Gleichzeitig wird in vorteilhafter Weise durch die mit dem Gleitlager integrierte Kurzschlußbrille im Vergleich zu bekannten Lösungen der Ölspeicher des Lagers vergrößert und durch die bessere Wärmeabfuhr die Betriebseinsatzzeit eines er-findungsgemäß ausgestalteten Synchron-kleinmotors vergrößert.

Die Erfindung sowie weitere vorteilhafte Ausgestaltungen der Erfindung werden im folgenden anhand schematisch dargestellter Ausführungsbeispiele in der Zeichnung näher erläutert. Darin zeigen :

Figur 1 in einem Teillängsschnittbild einen Synchronkleinmotor in Klauenpolbauart,

Figur 2 eine stirnseitige Draufsicht auf den Synchronkleinmotor gemäß Fig. 1,

Figur 3 in einem Längsschnittbild ein ein-stückiges, Gleitlager und Kurzschlußbrille in-tegrierendes, Sinter-Bauteil,

Figur 4 das einstückige Sinter-Bauteil gemäß Fig. 3 in einer kurzschlußbrillenseitigen Draufsicht,

Figur 5 eine erste Befestigung des einstückigen Sinter-Bauteils an der linken Stirnseite des Stators eines Motors gemäß Fig. 1, 2,

Figur 6 eine weitere Befestigungsart des einstückigen Sinter-Bauteils an der linken Stirnseite des Stators eines Motors gemäß Fig. 1, 2,

Figur 7 eine dritte Befestigungsart des einstückigen Sinter-Bauteils an der linken Stirnseite des Stators eines Motors gemäß Fig. 1, 2.

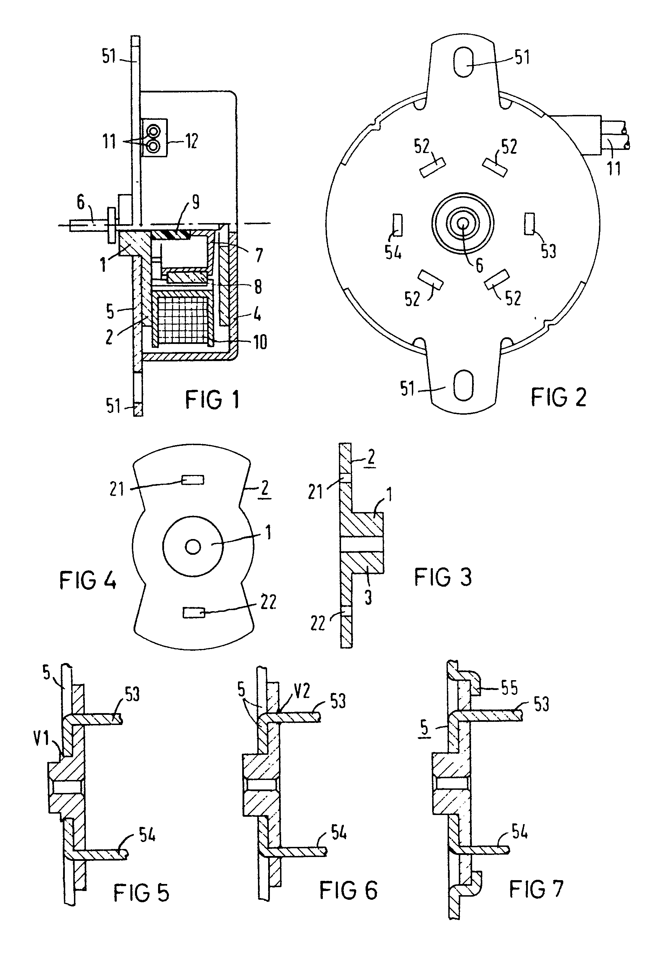

Der Stator des im Ausführungsbeispiels dar-gestellten Klauenpolmotors weist einen topf-förmigen Gehäuseteil 4 und einen an dessen linker Seite den topfförmigen Gehäuseteil 4 abschließenden Gehäuse-Deckel 5 auf, der beispielsweise durch randseitiges Verstemmen mit dem topfförmigen Gehäuseteil 4 fest verbunden ist. Sowohl der Bodenteil des topfförmigen Gehäuseteils 4 als auch der Gehäuse-Deckel 5 übernehmen gleichzeitig die Funktion von Polplatten ; dazu sind in beide Teile Polzungen eingesetzt, von denen in Fig. 2 die stirnseitigen Enden einer Gruppe von Hauptpolen 52 und von zwei Hilfspolen 53, 54 ersichtlich sind. An den Gehäuse-Deckel 5 sind außerdem radial über den topfförmigen Gehäuseteil 4 überstehende Befestigungsrohren 51 zur Befestigung des gesamten Motors in einer Motoraufnahme vorgesehen. Die Polzungen 52-54 werden innerhalb des Gehäuses des Elektromotors von einer Erregerspule 10 umschlossen, deren äußeres Anschlußkabel 11 aus einer Randöffnung 12 des topfförmigen Gehäuseteils 4 herausgeführt ist.

Mit dem linken Gehäuse-Deckel 5 ist gleichzeitig ein Gleitlager 1 zur einseitigen Aufnahme der Rotorwelle 6 verbunden. Die Rotorwelle 6 nimmt innerhalb des Statorgehäuses 4, 5 über einen Magnetträger 7 einen polarisierten Dauermagneten 8 auf. Zwischen dem Gleitlager 1 und dem Magnetträger 7 ist zusätzlich eine Distanz- bzw. Anlaufbuchse 9 vorgesehen.

Erfindungsgemäß sind das Gleitlager 1 und die in der Nähe dieses Gleitlagers 1 angeordnete Kurzschlußbrille 2 zu einem einstückigen, mit dem Stator verbundenen Sinter-Bauteil 1, 2, insbesondere einem einstückigen Sinterbronzeteil, zusammengefaßt. Im Bereich des Gleitlagers 1 weist dieses einstückige Sinter-Bauteil 1, 2 einen Zentrierbund 3 auf, mit dem das einstückige Sinter-Bauteil 1, 2 in eine korrespondierende Zentrieröffnung im Gehäuse-Deckel 5 einpaßbar ist. Die an der rechten Seite des Motors angedeutete Kurzschlußbrille kann in herkömmlicher Weise, z. B. durch Kleben, mit dem benachbarten Topfboden des topfförmigen Gehäuseteils 4 verbunden sein.

Das einstückige Sinter-Bauteil 1, 2 ist zweckmäßigerweise mit zwei Öffnungen 21, 22 versehen, durch die die von der linken Kurzschlußbrille des einstückigen Sinter-Bauteils 1, 2 belasteten Hilfspole 53, 54 axial durchsteckbar sind.

Die Figuren 5-7 zeigen drei vorteilhafte Ausführungsbeispiele zur Befestigung des einstückigen, die linke Kurzschlußbrille 2 und das Gleitlager 1 integrierenden Sinter-Bauteils 1, 2 am Gehäuse-Deckel 5.

Gemäß Fig. 5 ist in vorteilhafter Weise zur Verbindung des einstückigen Sinter-Bauteils 1, 2 mit dem Gehäuse-Deckel 5 der in die Zentrieröffnung eingepaßte Zentrierbund 3 gegen die Stirnseite 5 verstemmt (Verstemmung V1). Fig. 6 zeigt eine Befestigungsmöglichkeit ohne die Notwendigkeit, den Zentrierbund verformen zu müssen. Dazu ist vorgesehen, daß das einstückige Sinter-Bauteil 1, 2 mit Öffnungen 21, 22 versehen ist, durch die die mit dem Gehäuse-Deckel 5 fest verbundenen Hilfspole 53, 54 axial durchsteckbar sind ; im Randbereich der Öffnungen 21, 22 sind die Hilfspole 53, 54 mit dem einstückigen Sinter-Bauteil 1, 2 verstemmt (Verstemmung V2). Fig. 7 schließlich zeigt eine Befestigungsart ohne Notwendigkeit eines Verstemmens ; dazu sind zur Verbindung des einstückigen Sinter-Bauteils 1, 2 mit dem Stator an dessen das Gleitlager 1 aufnehmenden Gehäuse-Deckel 5 Befestigungszungen 55, 56 angestanzt und herausgedrückt, die nach der Montage des einstückigen Sinter-Bauteils 1, 2 im Sinne einer Festklemmung um dieses Bauteil umbiegbar sind.

## Ansprüche

1. Synchronkleinmotor, insbesondere Klauenpolmotor, mit einem Stator mit Gruppen von Hauptpolen (52) und von mittels Kurzschlußbrillen (2) belasteten Hilfspolen (53, 54) sowie mit in zumindest einem Gleitlager (1) drehbar gelagertem Dauermagnet-Rotor (7, 8) dadurch gekennzeichnet, daß das Gleitlager (1) und die in der Nähe dieses Gleitlagers (1) angeordnete Kurzschlußbrille (2) aus einem einstückigen, mit dem Statorgehäuse (4, 5) verbundenen Sinter-Bauteil (1, 2) gebildet sind.

2. Synchronkleinmotor nach Anspruch 1, dadurch gekennzeichnet, daß das einstückige Sinter-Bauteil (1, 2) aus einem nichtmagnetisierbaren Werkstoff sowohl hoher elektrischer Leitfähigkeit als auch hoher mechanischer Gleitfähigkeit besteht.

3. Synchronkleinmotor nach Anspruch 1, dadurch gekennzeichnet, daß das einstückige Sinter-Bauteil (1, 2) aus einem Sinterbronze-Bauteil besteht.

4. Synchronkleinmotor nach einem der Ansprüche 1 bis 3, dadurch gekennzeichnet, daß das einstückige Sinter-Bauteil (1, 2) mit einem axial einstückig angeformten Zentrierbund (3) versehen ist, mit dem das einstückige Sinter-Bauteil (1, 2) in eine korrespondierenden Zentrieröffnung des das Gleitlager (1) aufnehmenden Statorgehäuseteils (Gehäuse-Deckel 5) einpaßbar ist.

5. Synchronkleinmotor nach Anspruch 4, dadurch gekennzeichnet, daß zur Verbindung des einstückigen Sinter-Bauteils (1, 2) mit dem Statorgehäuse (4, 5) der in die Zentrieröffnung eingepaßte Zentrierbund (3) mit dem das Gleitlager (1) aufnehmenden Statorgehäuseteil (Gehäuse-Deckel 5) verstemmt ist (Fig. 5).

6. Synchronkleinmotor nach einem der Ansprüche 1 bis 4, dadurch gekennzeichnet, daß das einstückige Sinter-Bauteil (1, 2) mit Öffnungen (21, 22) versehen ist, durch die die Hilfspole (53, 54) axial durchsteckbar sind und daß zur Verbindung des einstückigen Sinter-Bauteils (1, 2) mit dem Statorgehäuse (4, 5) das einstückige Sinter-Bauteil (1, 2) im Randbereich der Öffnungen (21, 22) mit den durchgesteckten Hilfspolen (53, 54) verstemmt ist (Fig. 6).

7. Synchronkleinmotor nach einem der Ansprüche 1 bis 4, dadurch gekennzeichnet, daß zur Verbindung des einstückigen Sinter-Bauteils (1, 2) mit dem Statorgehäuse (4, 5) an dessen das Gleitlager (1) aufnehmenden Statorgehäuseteil (Gehäuse-Deckel 5) angestanzte und herausgebogene Befestigungszungen (55, 56) vorgesehen sind, mittels derer das einstückige Sinter-Bauteil (1, 2) an dem Statorgehäuseteil (Gehäuse-Deckel 5) festklemmbar ist (Fig. 7).

## Claims

1. A small synchronous motor, in particular a claw-pole motor, having a stator with groups of main poles (52) and auxiliary poles (53, 54) loaded by short-circuiting bridges (2), and with a permanent magnet rotor (7, 8) mounted to be rotatable in at least one sliding bearing (1), characterised in that the sliding bearing (1) and the short-circuiting bridge (2) arranged in the vicinity of this sliding bearing (1) consist of an integral sintered component (1, 2) connected to the stator housing (4, 5).

2. A small synchronous motor as claimed in Claim 1, characterised in that the integral sintered component (1, 2) consists of a non-magnetisable material which possesses both high electrical conductivity and high mechanical sliding properties.

3. A small synchronous motor as claimed in Claim 1, characterised in that the integral sintered component (1, 2) consists of a sintered bronze component.

4. A small synchronous motor as claimed in one of Claims 1 to 3, characterised in that the integral sintered component (1, 2) has an integral centering collar (3) axially moulded-on, by means of which the integral sintered component (1, 2) can be fitted into a corresponding centering opening in the stator housing component (housing cover 5) which accommodates the sliding bearing (1).

5. A small synchronous motor as claimed in Claim 4, characterised in that to enable the integral sintered component (1, 2) to be connected to the stator housing (4, 5), the centering collar (3) which fits into the centering opening is caulked to the stator housing component (housing cover 5) which accommodates the sliding bearing (1) (Fig. 5).

6. A small synchronous motor as claimed in one of the Claims 1 to 4, characterised in that the integral sintered component (1, 2) is provided with openings (21, 22) through which the auxiliary poles (53, 54) can be passed in the axial direction, and that to enable the integral sintered component (1, 2) to be connected to the stator housing (4, 5) the integral sintered component (1, 2) is caulked to the through-inserted auxiliary poles (53, 54) in the edge zone of the openings (21, 22) (Fig. 6).

7. A small synchronous motor as claimed in one of Claims 1 to 4, characterised in that to enable the integral sintered component (1, 2) to be connected to the stator housing (4, 5) the stator housing component (housing cover 5) which accommodates the sliding bearing (1) is provided with punched and bent-out fixing tongues (55, 56) by means of which the integral sintered component (1, 2) can be clamped to the stator housing component (housing cover 5).

**Revendications**

1. Petit moteur synchrone, notamment moteur à pôles à griffes, comportant un stator muni de groupes de pôles principaux (52) et de pôles auxiliaires (53, 54) chargés au moyen de lunettes (2) de court-circuit, ainsi qu'un rotor à aimant permanent (7, 8) monté rotatif dans au moins un palier lisse, (1), caractérisé par le fait que le palier lisse (1) et les lunettes de court-circuit (2) disposés à proximité de ce palier lisse (1) sont formés par un composant fritté (1, 2) réalisé d'un seul tenant et relié au carter (4, 5) du stator.

2. Petit moteur synchrone suivant la revendication 1, caractérisé par le fait que le composant fritté (1, 2) réalisé d'un seul tenant est constitué en un matériau non magnétisable possédant une conductivité électrique élevée et une aptitude au glissement mécanique élevée.

3. Petit moteur synchrone suivant la revendication 1, caractérisé par le fait que le composant fritté (1, 2) réalisé d'un seul tenant est constitué par une pièce de bronze fritté.

4. Petit moteur synchrone suivant l'une des revendications 1 à 3, caractérisé par le fait que le composant fritté (1, 2) réalisé d'un seul tenant est muni d'un collier de centrage (3) réalisé d'un seul tenant par façonnage dans une disposition axiale et avec lequel le composant fritté réalisé d'un seul tenant peut être adapté dans une ouverture de centrage correspondante de la partie du carter du stator (couvercle 5 du carter) logeant le palier lisse.

5. Petit moteur synchrone suivant la revendication 4, caractérisé par le fait que pour réaliser la liaison du composant fritté (1, 2) réalisé d'un seul tenant avec le carter (4, 5) du stator, le collet de centrage (3), monté dans l'ouverture de centrage, est appliqué par matage contre la partie du carter du stator (couvercle 5 du carter) logeant le palier lisse (1) (figure 5).

6. Petit moteur synchrone suivant l'une des revendications 1 à 4, caractérisé par le fait que le composant fritté (1, 2) réalisé d'un seul tenant est équipé d'ouvertures (21, 22) à travers lesquelles les pôles auxiliaires (53, 54) peuvent être enfichés axialement, et que pour la liaison du composant fritté (1, 2) réalisé d'un seul tenant avec le carter (4, 5) du stator, le composant fritté (1, 2) réalisé d'un seul tenant est appliqué par matage dans la zone marginale des ouvertures (24, 22) contre les pôles auxiliaires (53, 54) enfichés (figure 6).

7. Petit moteur synchrone suivant l'une des revendications 1 à 4, caractérisé par le fait que pour la liaison du composant fritté (1, 2) réalisé d'un seul tenant avec le carter (4, 5) du stator, il est prévu sur la partie du carter du stator (couvercle 5 du carter) logeant le palier lisse (1), des languettes de fixation (55, 56) réalisées par découpage et repliées et à l'aide desquelles le composant fritté (1, 2) réalisé d'un seul tenant peut être fixé sur la partie du carter du stator (couvercle 5 du carter) (figure 7).

FIG 1

FIG 2

FIG 4

FIG 3

FIG 5

FIG 6

FIG 7